# EUROPÄISCHE PATENTSCHRIFT

(11) **EP 2 295 917 B1**
(45) Veröffentlichungstag und Bekanntmachung des Hinweises auf die Patenterteilung: **15.07.2015**
(21) Anmeldenummer: 10170634.9
(22) Anmeldetag: 23.07.2010
(51) Int. Cl.: F28D 20/00, F24H 1/20, F24H 9/00, F24H 9/12

(54) **Ladevorrichtung zum Einschichten eines temperierten Mediums in einen Schichtenspeicher**
Loading device for layering a tempered medium into a stratified storage device
Dispositif de chargement pour l'installation d'un milieu tempéré monocouche dans un accumulateur de couches

(30) Priorität: 28.07.2009 DE 102009034948; 17.08.2009 DE 102009037710
(43) Veröffentlichungstag der Anmeldung: 16.03.2011
(73) Patentinhaber: Max Weishaupt GmbH, 88477 Schwendi (DE)
(72) Erfinder: Litfin, Diethard, 88475 Schwendi (DE); Heiß, Ralf, 88475 Schwendi (DE)
(74) Vertreter: Flügel Preissner Kastel Schober

(56) Entgegenhaltungen:
- EP-A1- 2 063 209
- DE-A1- 10 000 352
- DE-A1- 19 731 351
- DE-A1- 19 807 492
- US-A- 4 146 087

## Beschreibung

Die Erfindung betrifft eine Schichtladevorrichtung zum Einschichten eines temperierten Mediums in einen Schichtenspeicher mit wenigstens einer Einleiteinrichtung mit einem zum Betrieb des Schichtenspeichers sich in vertikaler Richtung nach oben erstreckend anzuordnenden Strömungskanal, wobei die Einleiteinrichtung wenigstens eine Abzweigstelle aufweist, an der ein Abzweigkanal zum Ausleiten des temperierten Mediums aus dem Strömungskanal und zum Einleiten des temperierten Mediums in den Schichtenspeicher von dem Strömungskanal abzweigt.

Schichtenspeicher der vorstehend angegebenen Art sind in dem Stand der Technik wohl bekannt. Sie werden insbesondere in Verbindung mit Solaranlagen eingesetzt. Durch die temperaturabhängige Einschichtung eines Mediums in den Schichtenspeicher können unterschiedliche Temperaturen, die von dem Vorlauf des Sonnenkollektors eingebracht werden, gespeichert werden. Zum Beispiel wird bei hoher Sonnenstrahlung eine hohe Temperatur in den Schichtenspeicher eingebracht. Um diese möglichst effektiv zu speichern, sollte das hochtemperierte Medium in eine Zone hoher Temperatur, also insbesondere in eine obere Schicht eingebracht werden. Ist die Sonneneinstrahlung geringer, wird auch das Medium nur mäßig erwärmt. Um diese mittlere Wärme zu speichern, ohne das heißere Medium, das in hohen Schichten gespeichert wird, abzukühlen, sollte das mittelmäßig temperierte Medium in einer mittleren Schicht abgegeben werden. Eine Vermischung sollte möglichst vermieden werden, demnach sollte auch kühleres Medium nicht in die Schichtladevorrichtung eintreten können, da es sonst mit nach oben in die heißeren Speicherschichten mitgeführt wird. Eine Selektion erfolgt zum Beispiel durch die unterschiedliche Dichte des unterschiedlich temperierten Mediums.

Aufgeheiztes Medium steigt, z.B. durch ein Steigrohr, nach oben; erkaltetes Medium fällt ab, wobei es z.B. in einem unteren Bereich des Schichtenspeichers erneut einer Erwärmung zugeführt wird.

Die DE 100 40892 C1 beschreibt einen Schichtenspeicher, der zwei voneinander isolierte Kammern und ein Steig- bzw. Fallrohr aufweist. Das Steig- und das Fallrohr sind über eine Beruhigungskammer miteinander verbunden und gewinkelt zueinander angeordnet. Der Vorlauf mit dem temperierten Medium bringt dieses in die Beruhigungskammer ein, wo es, je nach Temperatur, entweder in dem Steigrohr nach oben aufsteigen, oder in dem Fallrohr nach unten fallen kann. Das Steig- und das Fallrohr weisen jeweils eine Mehrzahl von Öffnungen auf, aus denen das Medium, je nach Temperatur, austreten kann.

Die DE 103 20569 B4 offenbart einen Schichtenspeicher, in dessen unterem Bereich ein Wärmetauscher eingesetzt ist. Von dem Wärmetauscher aus erstreckt sich nach oben hin ein Steigrohr, das temperiertes Medium nach oben ableitet. Der Wärmetauscher verfügt außerdem über mehrere Überlaufleitungen, die schräg nach unten in den Schichtenspeicher ragen. An dem Punkt, an dem sich das Steigrohr an den Wärmetauscher anschließt, ist eine Drossel vorgesehen. Durch einen solchen Aufbau wird kühleres Wasser bevorzugt im unteren Bereich des Schichtenspeichers eingespeichert, während nur warmes oder sehr heißes Medium nach oben steigt.

In der DE 10 2007 046905 A1 ist ein Schichtenspeicher offenbart, der in zwei Bereiche eingeteilt ist. In einer unteren Kammer, die als Einspeiseraum bezeichnet wird, befindet sich ein Wärmetauscher, der das zu temperierende Medium aufheizt. Von dem Einspeiseraum zweigen mehrere Steigrohre ab, die eine Mehrzahl von mit Membranen verschlossenen Öffnungen aufweisen. Die Steigrohre erstrecken sich in der oberen Kammer des Schichtenspeichers, dem sogenannten Schichtraum. Je nach Temperatur des Mediums tritt dieses aus einer bestimmten, mit einer Membran verschlossenen Öffnung aus.

Durch Anordnen einer Vielzahl von Öffnungen, die mit Membranen verschlossen sind, ist es möglich, besonders feinstufig das temperierte Medium in den Schichtenspeicher einzubringen.

In der DE 20 2004 010734 U1 ist ein Schichtenspeicher offenbart, in dessen unterem Bereich ein Wärmetauscher eingebracht ist. Von diesem Wärmetauscher erstreckt sich in Aufwärtsrichtung des Schichtenspeichers ein Steigrohr. Von dem Steigrohr zweigt eine Mehrzahl von Rohren ab, die sich nach unten geneigt in den Schichtenspeicher erstrecken. Über diese sich nach unten neigenden Rohre fließt das temperierte Medium, je nach Temperatur, in den Schichtenspeicher aus. Durch die Neigung nach unten und eine entsprechende Länge des Rohres wird ein Zurückfließen des kälteren Mediums in ein Steigrohr vermieden.

In der DE 199 37985 C1 ist ein Schichtenspeicher beschrieben, in dem ein temperiertes Medium über ein Steigrohr eingebracht wird, das eine Vielzahl von sogenannten Trennbereichen aufweist. An dem Steigrohr zweigen Rohre ab, die mehrere abwechselnd oben und unten in dem Rohr angeordnete Wände aufweisen. Dadurch entsteht eine Mehrzahl von hintereinander angeordneten Siphons, was dazu führt, dass nur Wasser, das die richtige Temperatur aufweist, durch diese Siphons in den Schichtenspeicher eintreten kann. Durch eine Vielzahl solcher Aufbauten ist eine besonders feine Schichtausbildung in dem Schichtenspeicher möglich.

Aus der EP 2 063 209 A1 ist ein Schichtlade-Speichersystem bekannt, bei dem ein Schichtlade-Wärmespeicher in den mittels einer Schichtladevorrichtung temperiertes Medium wie insbesondere Heizungswasser temperaturgeschichtet eingeleitet wird. Weitere Schichtspeicher mit Schichtladevorrichtungen zum Einschichten temperierten Mediums sind aus der DE 100 00 352 A1, der DE 198 07 492 A1, der DE 197 31 351 A1 und der US 4 146 087 A bekannt.

Die Schichtenspeicher nach dem Stand der Technik, wie sie oben beschrieben sind, haben den Nachteil eines komplizierten und unhandlichen Aufbaus. Eine Reparatur oder Wartung ist, auch bei eventuellen Verstopfungen oder Verkalkungen, nicht vorgesehen. Bei einigen Schichtenspeichern ist auch die Gefahr einer Verwirbelung beim Austritt des Mediums und somit der Vermischung des unterschiedlich temperierten Mediums in den einzelnen Schichten gegeben.

Aufgabe der Erfindung ist es, einen einfachen und leicht herzustellenden und zu montierenden Aufbau zum effektiven, möglichst verwirbelungsarmen temperaturabhängigen und/oder dichteabhängigen Einbringen eines Mediums in einen Schichtenspeicher bereitzustellen.

Bevorzugt soll der Schichtenspeicher auch nach Inbetriebnahme einfach gewartet werden können.

Die Aufgabe wird durch eine Schichtladevorrichtung mit den Merkmalen des Anspruches 1 gelöst.

Ein mit der Schichtladevorrichtung versehener Schichtspeicher ist Gegenstand des Nebenanspruches.

Vorteilhafte Ausgestaltungen der Erfindung sind Gegenstand der Unteransprüche.

Eine Schichtladevorrichtung zum Einschichten eines temperierten Mediums in einen Schichtenspeicher weist vorzugsweise wenigstens eine Einleiteinrichtung auf. Die Einleiteinrichtung ist zum Transportieren des temperierten Mediums vorzugsweise derart ausgebildet, dass sie das Medium dichteabhängig auf einem Niveau des Schichtenspeichers einleitet oder daran vorbei zu anderen Niveaus transportiert.

Dazu weist die Einleiteinrichtung vorzugsweise einen zum Betrieb des Schichtenspeichers sich in vertikaler Richtung nach oben erstreckend anzuordnenden Strömungskanal auf. In diesem Strömungskanal kann das temperierte Medium schnell zu seiner Bestimmungsschicht transportiert werden.

Weiter weist die Einleiteinrichtung vorteilhaft wenigstens eine Abzweigstelle auf, an der ein Abzweigkanal zum Ausleiten des temperierten Mediums aus dem Strömungskanal und zum Einleiten des temperierten Mediums in den Schichtenspeicher von dem Strömungskanal abzweigt.

Durch einen solchen Abzweigkanal ist es möglich, sowohl das temperierte Medium, das eine höhere Temperatur aufweist als die Schicht, die von dem Medium passiert wird, schnell vorbeizuleiten, als auch das Medium mit der passenden Temperatur direkt in die richtige Schicht einzuleiten.

Vorzugsweise weist der Abzweigkanal einen sich von der Abzweigstelle aus in vertikaler Richtung erstreckend anzuordnenden Ausleitabschnitt auf. Der Ausleitabschnitt trennt das einzuschichtende Medium von dem Medium, das in dem Strömungskanal weitergeleitet wird. Da er sich in einer vertikalen Richtung erstreckt, kann die laminare Strömung des Mediums beibehalten werden, und Verwirbelungen durch die Abtrennung des einzuschichtenden Mediums von dem weiterzuleitenden Medium werden vermieden.

Der Strömungskanal weist weiter vorzugsweise an der Abzweigstelle eine Verengung auf. Durch diese Verengung verringert sich der Querschnitt des Strömungskanals, was in einer erhöhten Fließgeschwindigkeit des transportierten Mediums resultiert. Das Medium wird nach oben beschleunigt, wodurch zum Einen ein schneller Weitertransport des heißeren Mediums nach oben möglich ist, und zum Anderen ein Staudruck in dem weiter transportierten Medium entsteht, der als Gegendruck zu kälterem Medium, welches außen an der Einleitstelle steht, verhindert, dass dieses sich in den Strömungskanal einmischen könnte. Damit wird verhindert, dass das weiterzutransportierende Medium in dem Strömungskanal abgekühlt wird. Gleichzeitig steht in dem Ausleitabschnitt das kältere Medium, das eine größere Dichte hat als das weiterzuleitende Medium, und verhindert dadurch, dass das heiße Medium in das kühle Medium eindringt. Die Dichte des kälteren Mediums und sein daraus resultierender statischer Druck haben somit die Funktion eines Stopfens.

Vorzugsweise ist die Querschnittsfläche des Strömungskanals an der Abzweigstelle größer als die Querschnittsfläche des Ausleitabschnittes.

Erst dadurch, dass die Querschnittsfläche des Strömungskanals größer ist als die Querschnittsfläche des Ausleitabschnittes, wird ein hoher Staudruck des weiterzuleitenden Mediums gebildet, um so effektiv zu verhindern, dass kaltes Medium in den Strömungskanal eindringt.

Die Ausbildung von Strömungskanal und Abzweigkanal ist in technisch einfacher Weise unkompliziert und platzsparend herstellbar. Beispielsweise kann in einem Rohr einfach eine Trennwand eingerichtet sein, die einen Teil des Rohrquerschnitts als Abzweigkanal abtrennt. Dadurch lässt sich das Rohr ohne Ansätze an seinem Außenumfang und ohne radiale Vorsprünge aus einfachen Materialien ausbilden. Es genügt eine einfache seitliche Öffnung zum Austritt.

Dadurch wird eine effektive dichteabhängige Einleitung ermöglicht.

Die Schichtladevorrichtung macht sich vorteilhafterweise die Dichteunterschiede des Mediums bei unterschiedlichen Temperaturen zunutze. Nur Medium, das wenigstens die gleiche Dichte hat wie das an der Abzweigstelle geschichtete Medium, kann den statischen Druck des geschichteten Mediums überwinden und in die Abzweigstelle eindringen. Ist seine Dichte zu gering, kann es den statischen Druck nicht überwinden und wird in dem Strömungskanal nach oben weitergeleitet, bis es zu einem Ausleitabschnitt kommt, an dem Medium mit einer gleichen Dichte geschichtet ist, dessen statischen Druck das weitergeleitete Medium dann überwinden kann.

Vorzugsweise ist die Einleiteinrichtung aus wärmeisolierendem Material gebildet. Durch die Verwendung von wärmeisolierendem Material wird ein Wärmeübertrag von dem in dem Strömungskanal aufsteigenden temperierten Medium in das bereits im Schichtenspeicher eingelagerte Medium verhindert. Ein Wärmeaustausch ist somit nur durch den direkten Materialaustausch an den passenden Abzweigstellen möglich.

Dadurch wird ein Energieverlust im temperierten Medium verhindert und einem Durchmischen der Schichten im Schichtenspeicher vorgebeugt. Beispielsweise ist die Einleiteinrichtung aus Kunststoff, wie z.B. Teflon PA, PP oder PE gebildet.

Vorzugsweise ist der Strömungskanal für eine nach oben gerichtete vertikale Erstreckung in seiner gesamten Länge während des Betriebes ausgebildet. Das Zusammenspiel von statischem Druck und Staudruck wird dann besonders effektiv, wenn das Bauelement, in dem die beiden Drücke zusammenwirken, sich vertikal nach oben erstreckt. Das temperierte Medium, das vorzugsweise eine hohe Temperatur aufweist, kann ohne zusätzliche Bauelemente wie beispielsweise Pumpen einfach durch die nach oben gerichtete Wärmeströmung aufgrund der geringen Dichte aufgeheizten Mediums zu seinem Bestimmungsort transportiert werden. Aufgrund der Dichteunterschiede von heißem und kaltem Medium steigt heißes Medium vertikal nach oben, während sich kaltes Medium unten ablagert. Eine vertikale Erstreckung des Strömungskanals nutzt die Dichteeigenschaften der unterschiedlich temperierten Medien aus und ermöglicht es, dass das wärmere Medium im Strömungskanal nach oben transportiert werden kann.

Vorzugsweise ist der Abzweigkanal im Bereich des Ausleitabschnittes parallel zu dem Strömungskanal angeordnet. Dadurch wird das Ausleiten des Mediums mit der passenden Temperatur in dem Strömungskanal mit möglichst geringer Verwirbelung und möglichst geringem Strömungswiderstand ermöglicht. Der Ausleitabschnitt ist zunächst nicht dazu vorgesehen, die Strömungsrichtung des passenden Mediums zu verändern. Andererseits entsteht in diesem Ausleitabschnitt bei Ankunft heißeren Mediums im Strömungskanal ein entsprechender Staudruck, so dass dieses heißere Medium nicht in den Ausleitabschnitt eindringt, sondern durch die Verengung vorbei an dem Ausleitabschnitt weiter in den Strömungskanal geleitet wird. Im Folgenden wird Medium, das die richtige Temperatur und damit die richtige Dichte hat, um den Staudruck zu überwinden, und das durch den Ausleitabschnitt in den Schichtenspeicher geleitet wird, als "passendes" Medium bezeichnet. Medium, das jedoch eine zu hohe Temperatur und damit eine zu geringe Dichte hat, und somit den Staudruck nicht überwinden kann, wird im Folgenden als "weiterzuleitendes" Medium bezeichnet. Es soll jedoch vermerkt werden, dass dies keine unterschiedlichen Medien sind, sondern, dass das von unten durch den Strömungskanal aufsteigende Medium je nach seinen physikalischen Eigenschaften unterschiedliche Wege nehmen kann. Der Ausleitkanal ist derart angeordnet, dass sich das passende Medium an der Stelle, an der sich der Ausleitkanal von dem Strömungskanal abtrennt, auch im Ausleitkanal parallel zum Strömungskanal bewegt. Dies gewährleistet eine laminare Strömung, und Turbulenzen, die zu Vermischungen führen könnten, werden vermieden.

Weiter vorzugsweise weist der Abzweigkanal wenigstens einen Einleitabschnitt auf, der für eine Anordnung im Betrieb in vertikaler Richtung oberhalb des Ausleitabschnitts ausgebildet ist. Der Abzweigkanal weist somit mehrere Abschnitte auf, in denen auf unterschiedliche Weise auf das auszuleitende Medium, das die passende Temperatur für die Schicht hat, in die es eingeleitet werden soll, Einfluss genommen wird. In dem ersten Abschnitt, dem Ausleitabschnitt, wird das passende Medium, das in den Schichtenspeicher eingeleitet werden soll, lediglich von dem Strömungskanal getrennt. Eine Veränderung der Strömungsrichtung wird bei einer vorteilhaften Ausgestaltung der Erfindung in diesem Abschnitt noch nicht vorgenommen. Dies geschieht erst in dem Einleitabschnitt. Dieser weist dazu vorzugsweise eine Abgabeöffnung auf, aus der das Medium aus der Einleiteinrichtung in den Schichtenspeicher eingeleitet werden kann.

Vorzugsweise ist die Querschnittsfläche dieser Abgabeöffnung größer als die Querschnittsfläche des Ausleitabschnitts, wobei sich die Querschnittsfläche des Einleitabschnitts von dem Ausleitabschnitts kontinuierlich vergrößert. Durch die kontinuierliche Vergrößerung der Querschnittsfläche wird das ausgeleitete Medium einem weichen Bremsvorgang unterworfen. Das bedeutet, dass die Fließgeschwindigkeit verringert wird, ohne jedoch abrupt verlangsamt zu werden. Durch das Verlangsamen der Fließgeschwindigkeit entsteht an der Abgabeöffnung eine laminare Strömung des eingebrachten Mediums und Turbulenzen werden vermieden. Dadurch wird auch verhindert, dass sich mehrere Schichten miteinander vermischen. Eine durch Turbulenzen bedingte Vermischung bewirkt einen Materialaustausch zwischen den Schichten, der gleichzeitig einen Energiefluss zur Folge hat. Dadurch würde bewirkt, dass sich die Temperatur zwischen den Turbulenzen ausgesetzten Schichten angleicht und das Wesen des Schichtenspeichers aufgelöst. Bei der vorteilhaften Ausgestaltung der Erfindung wird durch die sich von dem Ausleitabschnitt zum Einleitabschnitt kontinuierlich vergrößernde Querschnittsfläche eine möglichst geringe Turbulenz erzeugt.

Außerdem lässt sich so zwar ein Staudruck in dem engeren Ausleitabschnitt bereitstellen. Passend temperiertem Wasser, das in den Ausleitabschnitt einfließt, wird von dem sich erweiternden Querschnitt kaum Widerstand entgegengebracht, sodass es leicht in den Schichtenspeicher einfließen kann.

In vorteilhafter Ausgestaltung weist die Einleiteinrichtung in einem Bereich der Abzweigstelle eine Trennwand zwischen dem Strömungskanal und dem Abzweigkanal auf, die den Strömungs- und den Abzweigkanal voneinander trennt. Dadurch ist eine besonders einfache Konstruktion geschaffen, die ohne Klappen, Ansätze oder dergleichen auskommt und somit auch sehr kompakt ausgebildet werden kann. Wenn die in den Kanälen fließenden Medien baulich voneinander getrennt werden, ist es möglich, die Flussrichtung eines der in den Kanälen fließenden Medien zu verändern, ohne dabei das andere Medium zu beeinflussen. Vorzugsweise dient die Trennwand weiterhin als Führungstrennwand zum Entlangführen des nach oben strömenden Mediums in dem Strömungskanal. Es ist dabei aus Gründen des einfacheren Aufbaues der Schichtladevorrichtung als auch aus Gründen der Kostenersparnis von Vorteil, wenn Bauteile mehrere Funktionen übernehmen können. In der bevorzugten Ausgestaltung ist die Trennwand so zwischen dem Strömungskanal und dem Abzweigkanal angeordnet, dass sie sowohl die beiden Kanäle voneinander trennen kann, als auch ein schnelles Entlangführen des nach oben strömenden Mediums gewährleistet.

Vorzugsweise ist die Trennwand daher so ausgebildet, dass sie sich in einem ersten Bereich parallel zu dem Strömungskanal in vertikaler Richtung erstreckt und sich in einem zweiten Bereich nach außen geneigt erstreckt. Dadurch dass die Trennwand parallel zu dem Strömungskanal ausgebildet ist, kann sie das nach oben strömende Medium weiterführen. Außerdem kann sie durch diese Anordnung den Strömungs- von dem Abzweigkanal trennen, ohne dass in dem Trennbereich Verwirbelungen entstehen. Sie bietet mit einer solchen Anordnung die geringste Angriffsfläche für das auf die Kante der Trennwand zuströmende Medium.

Dadurch dass sich der zweite Bereich der Trennwand von dem Strömungskanal aus in vertikaler und horizontaler Richtung nach außen geneigt erstreckt, wird das in den Abzweigkanal ausgeströmte Medium in horizontaler Richtung in den Schichtenspeicher eingebracht. Der zweite Bereich der Trennwand dient zum Richtungswechsel des Flusses und gibt dem Medium einen horizontalen Impuls. Ein horizontales Einströmen ist in Vergleich zu einem vertikalen Einströmen vorzuziehen. Ein vertikales Einströmen würde zu einem Impuls in vertikaler Richtung führen, die durch Strömung in vertikaler Richtung eine nicht erwünschte Vermischung der einzelnen Temperaturschichten zur Folge hätte.

Die Verengung in dem Strömungskanal wird vorzugsweise durch den Abzweigkanal gebildet. Der Abzweigkanal ist in seiner Form so ausgebildet, dass er, wenn er in den Strömungskanal eingebracht wird, den folgenden physikalischen Effekt zur Folge hat: im Bereich der parallel zu dem Strömungskanal ausgebildeten Trennwand des Abzweigkanals wird der Strömungskanal verengt, was in einer höheren Fließgeschwindigkeit des sich nach oben bewegenden Mediums resultiert. Dadurch dass die Verengung des Strömungskanals durch den Abzweigkanal selbst gebildet ist, ist ein sehr kompakter und einfacher Aufbau mit nur wenigen Elementen möglich. Der Außendurchmesser der Schichtladevorrichtung kann über deren gesamte Länge gleichbleibend sein.

Der in den Strömungskanal eingebrachte Abzweigkanal weist, wie oben erörtert, einen zweiten Bereich auf, der sich in vertikaler und horizontaler Richtung nach außen geneigt erstreckt. Durch diesen zweiten Bereich weist der Strömungskanal nach der Verengung einen sich in der Querschnittsfläche kontinuierlich erweiternden Abschnitt auf. Durch die kontinuierliche Erweiterung des Strömungskanals nach der Verengung wird das Medium nach oben weitergeleitet, ohne dass Verwirbelungen entstehen.

Vorzugsweise wird die Verengung durch den parallel zum Strömungskanal angeordneten ersten Bereich der Trennwand gebildet und der sich erweiternde Abschnitt des Strömungskanals durch die Anordnung des zweiten Bereiches der Trennwand, der geneigt angeordnet ist, ausgebildet. Durch eine solche Anordnung kann die Trennwand mehrere Funktionen erfüllen, zum Einen bildet sie einen verengten Teil des Strömungskanals, in dem das weiterzuleitende Medium nach oben weitergeführt wird, zum Anderen dient sie aber auch gleichzeitig als Führungswand, entlang der sich der Strömungskanal von der Verengung aus erweitert. Durch eine solche Anordnung lässt sich die Einleiteinrichtung besonders einfach herstellen und gleichzeitig lassen sich Kosten sparen. Es sind nämlich keine zusätzlichen Bauteile vorgesehen bzw. nötig, die die Funktionen, die die Trennwand erfüllt, übernehmen müssten.

Vorzugsweise sind der Strömungskanal und der Abzweigkanal in einem rohrförmigen Bauteil gebildet, das einen Rohrbereich mit Rohrwandbereichen aufweist. Durch die einstückige Ausbildung des Strömungskanals und des Abzweigkanals in einem einzelnen Bauteil kann die Schichtladevorrichtung besonders platzsparend ausgebildet sein und gleichzeitig einfach hergestellt werden. Es müssen nicht mehrere Bauteile gefertigt werden, die dann miteinander verbunden werden und an der Verbindungsstelle Schwachstellen aufweisen, sondern die Kanäle sind einstückig ausgebildet, ohne irgendeinen Verbindungsbereich dazwischen.

Das rohrförmige Bauteil weist vorteilhaft wenigstens einen Verdrehschutz auf. Durch einen solchen Verdrehschutz ist es möglich, das rohrförmige Bauteil exakt mit anderen Bauteilen zu verbinden und die richtige Anordnung der Bauteile zueinander zu gewährleisten.

Vorzugsweise hat das rohrförmige Bauteil dabei rechteckig zueinander angeordnete planare Rohrwandbereiche, durch die nicht nur ein Verdrehen miteinander verbundener Bauteile verhindert wird, sondern sogar eine noch exaktere Anordnung der Bauteile zueinander möglich wird.

Des Weiteren ist es auch aus lagerlogistischen Gründen von Vorteil, wenn Bauteile rechteckig ausgebildet sind. Dadurch ist eine maximale Ausnutzung des Lagerraumes möglich, was letztendlich zur Kostenersparnis bei dem Hersteller des Bauteiles führt.

Vorzugsweise verbindet die Trennwand zwei sich gegenüberliegende Rohrwandbereiche miteinander. Damit bietet die Trennwand nur in einem geringen Bereich eine Angriffsfläche für das von unten auf die Trennwand zuströmende Medium. Verwirbelungen in zusätzlichen Bereichen, die auftreten, wenn die Trennwand nicht bündig mit den Rohrwandbereichen abschließt, können so vermieden werden. Des Weiteren ist auch die Herstellung des rohrförmigen Bauteils erleichtert, und das Bauteil weist eine wesentlich höhere Stabilität auf, als wenn die Trennwand zusätzliche Beabstandungen zu den Rohrwandbereichen aufweisen würde.

In bevorzugter Ausgestaltung weist die Schichtladevorrichtung ein Steigrohr auf, wobei die Einleiteinrichtung als Modulbauteil des Steigrohres in einer modularen Bauweise oder als einstückiger Teilbereich des Steigrohres ausgebildet ist. Das Steigrohr dient vorzugsweise dazu, das temperierte Medium in dem Schichtenspeicher nach oben zu leiten. Schichtenspeicher können in unterschiedlichen Größen gefertigt sein. Für den Hersteller solcher Schichtenspeicher ist es daher von Vorteil, wenn er Steigrohre zur Verfügung hat, die er für Schichtenspeicher unterschiedlicher Größen verwenden kann. Dies kann er vorzugsweise mit einem aus Modulbauteilen zusammengesetzten Steigrohr realisieren.

Durch die Modulbauweise lässt sich außerdem der Transport und die Montage/Demontage in engen Räumen erleichtern, da das Steigrohr vor Ort zusammengesetzt und auseinandergebaut werden kann. Einstückige Steigrohre können aber je nach Einsatz auch Vorteile bei der Herstellung haben.

Vorzugsweise weist ein modular ausgebildetes Steigrohr neben der Einleiteinrichtung als weitere Modulbauteile auch Verbindungsbauteile auf, die die Einleiteinrichtungen miteinander verbinden. Auf diese Weise kann das Steigrohr auf die individuellen Bedürfnisse ganz genau angepasst werden.

Die Einleiteinrichtung ist zum Beispiel als Zwischenbauteil ausgebildet, welche z.B. als einfache Rohrstücke ausgebildete Verbindungsbauteile, die ohne zusätzliche Aussparungen, Vorsprünge oder ähnliches ausgebildet sind, untereinander verbinden. Durch Verbinden dieser beiden Bauteilarten ist es möglich, im Hinblick auf die Kosten, ein Steigrohr so auszubilden, dass es gerade so viele Einleiteinrichtungen aufweist, wie für das Bedürfnis des Kunden nötig sind. Die Verbindungsbauteile können kostengünstiger hergestellt werden.

Bei einer modularen Bauweise ist es wünschenswert, dass die Bauteile möglichst einfach miteinander verbunden sind. Daher ist in einer vorteilhaften Ausgestaltung das Verbindungsbauteil über eine Steckverbindung mit der Einleiteinrichtung verbunden. Zusätzliche mechanische Verbindungselemente brauchen dann nicht vorgesehen zu werden. Dies vereinfacht die Verbindung der Bauteile um ein Wesentliches und trägt außerdem wegen der Materialersparnis zu einer Kostenersparnis bei.

Zum Fixieren der Steckverbindung weist die Steckverbindung vorzugsweise eine Rasteinrichtung auf. Durch diese Rasteinrichtung werden das Verbindungsbauteil und die Einleiteinrichtungen zueinander arretiert und aneinander befestigt. Dadurch lässt sich das zusammengesetzte Steigrohr bei einer Demontage an einem Stück nach oben aus dem Schichtenspeicher herausziehen.

Weiter vorzugsweise weist die Steckverbindung einen Begrenzungsanschlag auf. Durch diesen Begrenzungsanschlag wird verhindert, dass die Verbindungsbauteile und die Modulbauteile ineinander rutschen.

Vorteilhaft ist erfindungsgemäß ein Schichtenspeicher vorgesehen, der eine Temperiereinrichtung und ein daran angeschlossenes Steigrohr sowie die oben beschriebene Schichtladevorrichtung aufweist. Vorzugsweise ist das Steigrohr an der Temperiereinrichtung befestigt, da so das Medium, das in der Temperiereinrichtung aufgeheizt wird, sofort ohne Umwege zu seinem Bestimmungsort weitergeleitet werden kann.

Vorzugsweise erstreckt sich das Steigrohr dabei vertikal über die gesamte Länge des Schichtenspeichers. Damit ist es möglich, Medium mit ganz unterschiedlichen Temperaturen an ganz unterschiedlichen Stellen des Schichtenspeichers einzuleiten, da vorzugsweise das Steigrohr mehrere Einleiteinrichtungen aufweist.

Vorzugsweise ist am Kopfende des Schichtenspeichers eine Zugangsöffnung zu dem Steigrohr vorgesehen. Diese Zugangsöffnung ist vorzugsweise verschließbar ausgebildet. Durch diese Zugangsöffnung ist es möglich, das Steigrohr, insbesondere ein modular ausgebildetes Steigrohr herauszunehmen und/oder zu demontieren, beispielsweise um es zu warten und/oder zu reinigen. Es muss nicht, wie das bisher der Fall war, der gesamte Schichtenspeicher aus dem Raum entfernt werden, sondern es muss lediglich eine Zugangsöffnung geöffnet werden, um daraus das Steigrohr zu entnehmen. Die Zugangsöffnung ist vorzugsweise verschließbar, um so einen Leckverlust aus dem Schichtenspeicher zu verhindern. Auch wirkt der Verschluss als Barriere für die in dem im Steigrohr befindlichen Medium transportierte Wärme. Der Verschluss trägt damit zusätzlich zur Vermeidung eines Energieverlustes bei.

In vorteilhafter Ausgestaltung ist seitlich am Schichtenspeicher erfindungsgemäß eine Zugriffsöffnung vorgesehen, die einen Zugang zu der Temperiereinrichtung bereitstellt. Durch diese Zugriffsöffnung ist es möglich, die Temperiereinrichtung aus dem Schichtenspeicher zu entfernen, bzw. auf diese zuzugreifen und sie zu warten, zu montieren, demontieren und/oder zu reinigen, ohne den Schichtenspeicher aus dem für ihn bestimmten Raum entfernen zu müssen. In den bisherigen Schichtenspeichern war ein Zugriff auf die Temperiereinrichtung nicht möglich. Aus diesem Grund mussten die Schichtenspeicher immer komplett ausgetauscht werden, wenn die Temperiereinrichtung einen Defekt aufwies. In erfindungsgemäßer Ausgestaltung ist dies nicht mehr nötig, da jetzt auch die Temperiereinrichtung selbst entweder über die Zugriffsöffnung repariert oder ausgetauscht werden kann.

Vorzugsweise ist die Temperiereinrichtung schräg in den Schichtenspeicher eingebracht. Die Erstreckung in horizontaler Richtung ist zum seitlichen Entfernen vorteilhaft, während eine Erstreckung in vertikaler Richtung zum Einleiten einer Fließbewegung der temperierten Mediums vorteilhaft ist. Daher ist die schräg geneigte Anordnung besonders bevorzugt, dabei ist es von besonderem Vorteil, wenn das Ende der Temperiereinrichtung, das zum Außenbereich des Schichtenspeichers weist, höher angeordnet ist als das Ende der Temperiereinrichtung, das sich im Inneren des Schichtenspeichers befindet. Dadurch ist auch in der Temperiereinrichtung eine klare Verteilung des darin befindlichen Mediums gegeben. Das höhere Ende der Temperiereinrichtung ist an der Außenwand des Schichtenspeichers angeordnet, während das untere Ende im Inneren des Schichtenspeichers angeordnet ist. Wird nun ein heißes Überträgermedium von außen (z.B. von einem Solarkollektor) in die Temperiereinrichtung eingebracht, kommt das Überträgermedium zunächst mit dem wärmeren Medium in Kontakt, das am höchsten Ende der Temperiereinrichtung ansteht. Dieses Medium ist wesentlich wärmer als das, das sich am Boden der Temperiereinrichtung befindet. Durch eine solche Anordnung wird verhindert, dass das Überträgermedium seine Energie an kaltes Medium abgibt. Es wird zunächst nur ohnehin energiereiches Medium weiter aufgeheizt, und so einem Energieverlust vorgebeugt.

Vorzugsweise weist die Temperiereinrichtung einen Wärmetauscher zum Temperieren des Mediums und ein Gehäuse aus wärmeisolierendem Material auf. In dem Wärmetauscher wird ein Energieträger entlanggeleitet, um so die durch beispielsweise eine Solaranlage eingefangene Energie auf das zu temperierende Medium zu übertragen. Dieser Wärmetauscher ist vorzugsweise in einem Gehäuse aus wärmeisolierendem Material untergebracht, um zu verhindern, dass ein Energieaustausch zwischen den Schichten, die in dem Schichtenspeicher gespeichert sind, und dem Energieträger, der durch den Wärmetauscher fließt, stattfindet.

Weiter ist das Gehäuse vorzugsweise so ausgebildet, dass es das zu temperierende Medium aufnehmen kann und dieses in das Steigrohr weiterleitet. So ist ein kontinuierlicher Fluss des zu temperierenden Mediums um den Wärmetauscher herum gewährleistet und eine effektive Energieübertragung von dem Energieträger auf das in dem Schichtenspeicher gespeicherte Medium kann bereitgestellt werden.

Damit genau das Medium, das temperiert werden muss, in das Gehäuse eintritt, d. h. insbesondere das kältere Medium, weist das Gehäuse an seinem unteren Bereich wenigstens eine Eintrittsöffnung auf. Weiter vorzugsweise sind die Eintrittsöffnungen an dem inneren Ende des Gehäuses ausgebildet. Dadurch wird erreicht, dass lediglich das kälteste Wasser, das in dem Schichtenspeicher gespeichert ist, in das Gehäuse eindringt und mit dem Wärmetauscher in Kontakt kommt. Wärmeres Medium, das sich am oberen Bereich des Gehäuses befindet, kann nicht eindringen, da hier keine Eintrittsöffnungen vorhanden sind. Durch eine solche Anordnung ist es möglich, auch kälteres Wasser in Schichten in dem Schichtenspeicher zu speichern. Es wird nämlich lediglich das kälteste Wasser von dem Schichtenspeicher in das Gehäuse eingebracht, die Schichten, die aus kühlem Medium aufgebaut ist, das aber eine etwas höhere Temperatur als das in das Gehäuse eingebrachte Medium aufweist, werden nicht verändert.

In vorteilhafter Ausgestaltung weist das Gehäuse oberhalb des in ihm befindlichen Wärmetauschers einen Gehäusekanal auf, der aufgeheiztes Medium zu dem Steigrohr leitet. Vorzugsweise ist der Gehäusekanal am oberen Bereich des Gehäuses angeordnet und das Steigrohr an dem Gehäusekanal angeschlossen. Ein solcher Gehäusekanal leitet das aufgeheizte Medium schnell aus dem Gehäuse ab, so dass es, ohne sich noch einmal mit kühlerem Medium zu vermischen, in das Steigrohr eingebracht wird. Dadurch werden eine Energieverteilung und damit ein Energieverlust des aufgeheizten Mediums verhindert. Da das aufgeheizte Medium sich im oberen Bereich des Gehäuses ansammelt, ist es vorteilhaft, wenn der Gehäusekanal, der genau dieses Medium ableiten soll, auch am oberen Bereich des Gehäuses angeordnet ist.

Da es das Ziel des Gehäusekanals ist, das aufgeheizte Medium in das Steigrohr zu leiten, ist der Gehäusekanal vorzugsweise direkt an das Steigrohr angeschlossen.

In einer bevorzugten Ausgestaltung vergrößert sich der Gehäusekanal in Richtung von dem inneren Ende des Gehäuses zu dem äußeren Ende des Gehäuses hin. Durch die Vergrößerung des Querschnitts des Gehäusekanals wird das darin geleitete Medium verlangsamt, und ein laminares Einströmen des Mediums von dem Gehäusekanal in das Steigrohr ermöglicht. Turbulenzen werden vermieden, und so eine Durchmischung des Mediums an der Eintrittsstelle in das Steigrohr verhindert. Turbulenzen am Eingang des Steigrohres würden ein schnelles Weitertransportieren des temperierten Mediums verhindern, da sie eine bremsende Wirkung haben. Dies wird mit dem bevorzugten Aufbau jedoch verhindert.

Der Gehäusekanal weist an dem äußeren Ende des Gehäuses eine Ausleitöffnung aufweist, wobei sich die Ausleitöffnung im Bereich des Gehäusekanals in Umfangsrichtung des Gehäuses erstreckt und mit dem Steigrohr verbunden ist. Durch eine derartige Anordnung der Ausleitöffnung kann lediglich das Medium in das Steigrohr eintreten, das eine gleiche Temperatur aufweist. Kälteres Medium, das sich in unteren Bereichen des Gehäuses befindet, kann somit nicht in das Steigrohr eindringen. Damit wird gewährleistet, dass nur das wärmste Medium in den Schichtenspeicher weitergeleitet wird.

In bevorzugter Ausgestaltung weist der Wärmetauscher zum Leiten eines Energieträgers im oberen Bereich des Gehäuses eine Wendel und im unteren Bereich ein geradliniges Bauteil auf, die am inneren Ende des Gehäuses miteinander verbunden sind. Der durch die Wendel fließende Energieträger ist wärmer als der durch das geradlinige Bauteil fließende Energieträger.

Daher ist es von Vorteil, wenn die Wendel im oberen Bereich des Gehäuses angeordnet ist, wo sich auch das wärmere Medium befindet.

Ein Energieverlust des bereits temperierten Mediums in dem Gehäuse wird dabei verhindert, da es nur mit dem wärmeren Energieträger wechselwirken kann. Um eine besonders effiziente Abgabe der Energie von dem Energieträger an das zu temperierende Medium zu gewährleisten, wird der Energieträger durch eine Wendel mit mehreren Windungen geleitet, um so eine größere Kontaktfläche bereitzustellen. Da durch das geradlinige Bauteil der Energieträger fließt, der seine Energie bereits an das zu temperierende Medium abgegeben hat, ist es wünschenswert, dass eine möglichst geringe Wechselwirkung zwischen dem Energieträger und dem in dem Gehäuse befindlichen Medium bereitgestellt wird. Aus diesem Grund ist es von Vorteil, wenn dieses Bauteil geradlinig verläuft. Außerdem kommt der Energieträger, der bereits abgekühlt ist, im unteren Bereich lediglich mit kühlerem Medium in Kontakt, und kann so dem Medium keine Energie entziehen. Eine Verbindung der beiden Bauteile gewährleistet, dass der Energieträger in den Wärmetauscher eingeleitet und aus ihm wieder herausgeleitet werden kann.

Die Wendel umfasst einen Zulauf, insbesondere für einen zufließenden Energieträger mit einer hohen Temperatur, und das geradlinige Bauteil einen Ablauf, insbesondere für einen abfließendes Energieträger mit niedrigerer Temperatur als der des zufließenden Energieträgers, umfasst, wobei der Zulauf in im Betrieb des Schichtenspeichers vertikaler Richtung über dem Ablauf angeordnet ist.

Es ist von Vorteil, wenn der Zulauf des Energieträgers sich an der Wendel befindet, während der Ablauf des Energieträgers an dem geradlinigen Bauteil angeordnet ist. Von besonderem Vorteil ist es, wenn der Zulauf in vertikaler Richtung über dem Ablauf angeordnet ist. Fließt nun ein Energieträger mit hoher Temperatur durch den Zulauf in die Wendel ein, kommt er mit dem Medium in dem Gehäuse in Kontakt, das die höchste Energie in sich trägt. Beim Durchfluss durch die Wendel gibt der Energieträger seine Energie an das zu temperierende Medium ab und fließt, von kühlerem Medium umgeben, durch den unteren Zulauf ab. Durch eine solche Anordnung ist eine optimale Energieübertragung von dem Energieträger auf das zu temperierende Medium gewährleistet.

Ein Ausführungsbeispiel der Erfindung wird nachfolgend anhand der beigefügten Zeichnung näher erläutert. Darin zeigt:
- Fig. 1: einen Längsschnitt durch einen Schichtenspeicher mit einer Temperiereinrichtung und einem Steigrohr;
- Fig. 2: einen Längsschnitt durch ein modular aufgebautes Steigrohr;
- Fig. 3: einen Längsschnitt durch ein einstückig ausgebildetes Steigrohr;
- Fig. 4: eine perspektivische Ansicht auf ein Gehäuse für einen Wärmetauscher; und
- Fig.5: einen Längsschnitt durch die Temperiereinrichtung.

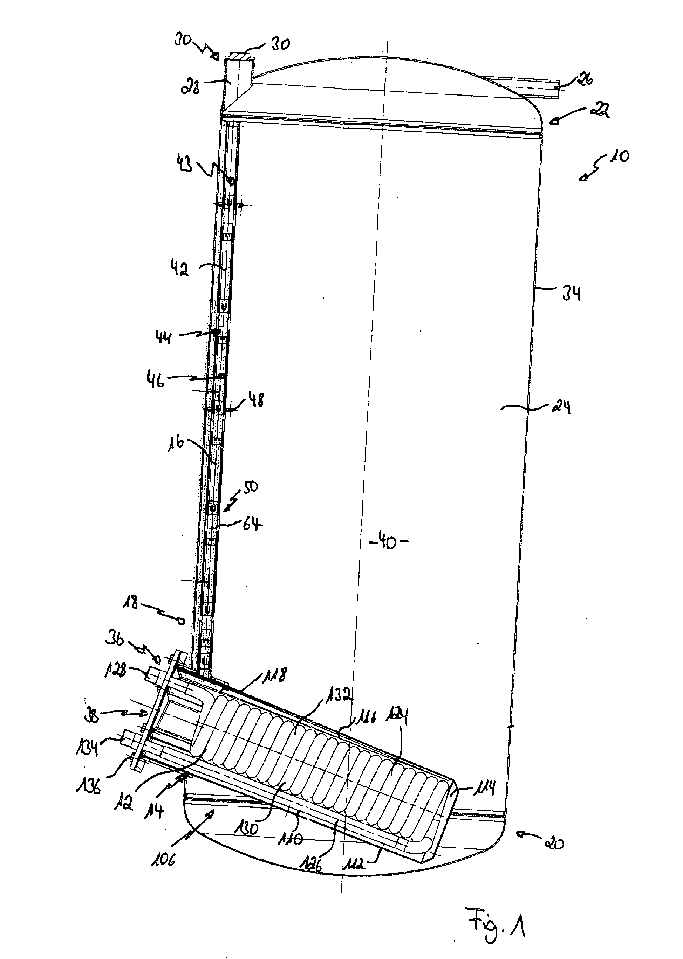

Fig. 1 zeigt einen Längsschnitt durch einen Schichtenspeicher 10, der einen Wärmetauscher 12 in einem Gehäuse 14 und ein an das Gehäuse 14 anschließendes Steigrohr 16 aufweist. Der Wärmetauscher 12 in dem Gehäuse 14 und das Steigrohr 16 bilden die Schichtladevorrichtung 18 für den Schichtenspeicher 10. Der Schichtenspeicher 10 ist im Betrieb vertikal anzuordnen und weist im unteren Bereich einen Boden 20 und im oberen Bereich ein Kopfende 22 auf. In dem Schichtenspeicher 10 ist ein temperiertes Medium 24, insbesondere Wasser, schichtweise gespeichert. Kältere Schichten sind im unteren Bereich des Schichtenspeichers 10 gespeichert, während wärmere Schichten im oberen Bereich des Schichtenspeichers 10 gespeichert sind.

Des Weiteren weist der Schichtenspeicher 10 an dem Kopfende 22 einen Stutzen 28 auf, der als Zugangsöffnung 30 zum Bilden eines Zugangs zu dem Steigrohr 16 ausgebildet ist, und der mit einem Deckel 32 verschließbar ist.

In der sich längs nach oben erstreckenden Wandung 34 des Schichtenspeichers 10 befindet sich im unteren Bereich eine Zugriffsöffnung 36 zum Bilden eines Zugriffes auf eine Temperiereinrichtung 38, die in dem hier dargestellten Beispiel einfach durch den Wärmetauscher 12 gebildet ist.

In dieser Zugriffsöffnung 36 ist die Temperiereinrichtung 38 schräg angeordnet und erstreckt sich zu einem Inneren 40 des Schichtenspeichers 10. An die Temperiereinrichtung 38 schließt sich im Bereich der Wandung 34 das Steigrohr 16 an und erstreckt sich über die gesamte Länge des Schichtenspeichers 10 vertikal nach oben bis hin zu dem Stutzen 28.

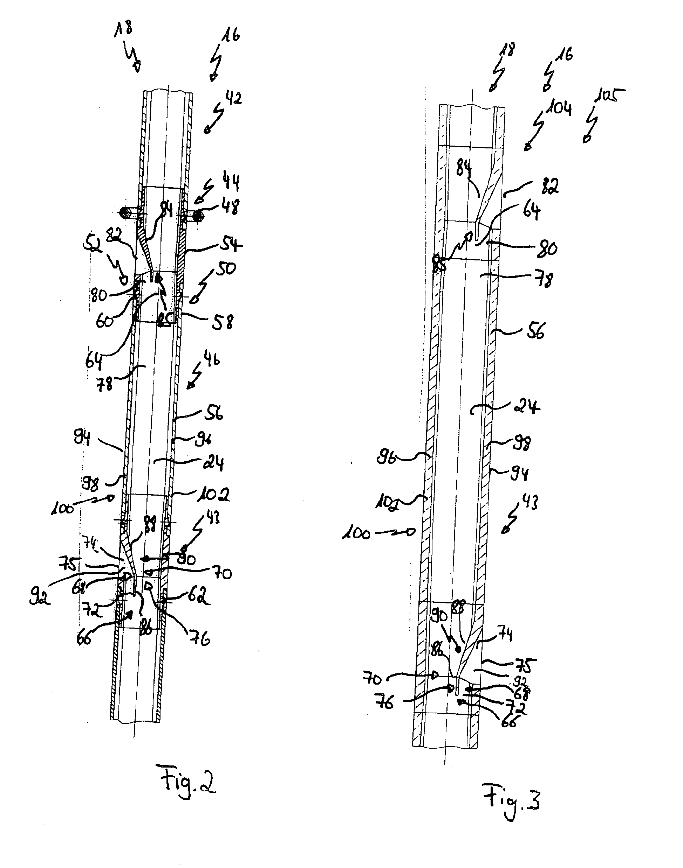

Fig. 2 zeigt einen Längsschnitt durch einen Bereich des Steigrohres 16 aus der Fig. 1.

Der Längsschnitt zeigt ein modular ausgebildetes Steigrohr 42 aus wärmeisolierendem Material 43, das als Modulbauteile 44 Einleiteinrichtungen 64 und Verbindungsbauteile 46 aufweist. Dargestellt sind hier zwei Einleiteinrichtungen 64, die mit einem Verbindungsbauteil 46 dazwischen verbunden sind. Selbstverständlich können über die Länge verteilt viele Einleiteinrichtungen 64 jeweils mit Verbindungsbauteilen 46 dazwischen vorgesehen sein. Das so modular ausgebildete Steigrohr 42 ist in Ringen 48 an der Wandung 34 des Schichtenspeichers 10 geführt. Das Verbindungsbauteil 46 und die Einleiteinrichtungen 64 sind über Steckverbindungen 50 miteinander verbunden, wobei die Steckverbindung 50 Rasteinrichtungen 52 zum Fixieren aufweist. Des Weiteren weist die Steckverbindung 50 einen Begrenzungsanschlag 54 auf, der als Vorsprung an der Einleiteinrichtung 64 ausgebildet ist.

Das Verbindungsbauteil 46 ist als einfaches Rohr 56 ausgebildet und weist an seinen Enden 58 Einrastnuten 60 auf, in die Rastvorsprünge 62, die an der Einleiteinrichtung 64 gebildet sind, zum Bilden der Rasteinrichtung 52 einrasten.

Die Einleiteinrichtungen 64 weisen Abzweigstellen 66 auf, an denen Abzweigkanäle 68 von einem sich über die gesamte Länge des Steigrohres 16 erstreckenden Strömungskanal 70 abzweigen. Der Abzweigkanal 68 weist einen sich in vertikaler Richtung erstreckenden Ausleitabschnitt 72 und einen oberhalb des Ausleitabschnittes 72 angeordneten Einleitabschnitt 74 der Abgabeöffnung 75 auf.

Der Strömungskanal 70 ist im Bereich der Abzweigstelle 66 derart verengt, dass die Verengung 76 eine größere erste Querschnittsfläche 78 des Strömungskanals 70 als die zweite Querschnittsfläche 80 des Ausleitabschnittes 72 zur Folge hat. Eine dritte Querschnittsfläche 82, die an dem Einleitabschnitt 74 ausgebildet ist, ist größer als die zweite Querschnittsfläche 80, wobei sich die Querschnittsfläche von dem Ausleitabschnitt 72 zu dem Einleitabschnitt 74 kontinuierlich vergrößert.

Der Abzweigkanal 68 ist in dem Strömungskanal 70 ausgebildet, in dem eine Trennwand 84 als Begrenzung 85 in der Einleiteinrichtung 64 gebildet ist.

In einem ersten Bereich 86 erstreckt sich die Trennwand 84 parallel zu dem Strömungskanal 70, wobei sich an den ersten Bereich 86 ein zweiter Bereich 88 anschließt, der sich in Strömungsrichtung gesehen von dem Strömungskanal 70 aus in vertikaler und horizontaler Richtung nach außen geneigt erstreckt.

Die Trennwand 84 ist gleichzeitig als Führungstrennwand 90 ausgeführt, entlang der heißeres temperiertes Medium 24 nach oben strömen kann. Die Trennwand 84 ist weiter so ausgebildet, dass sich die erste Querschnittsfläche 78 des Strömungskanals 70 kontinuierlich nach der Verengung 76 wieder erweitert. An diesem sich kontinuierlich erweiternden Abschnitt 92 strömt das heißere temperierte Medium 24 in vertikaler Richtung nach oben.

Der Strömungskanal 70 und der Abzweigkanal 78 sind in einem rohrförmigen Bauteil 94 gebildet, das einen Rohrbereich 96 mit sich in Strömungsrichtung erstreckendem Rohrwandbereichen 98 aufweist.

In dem Rohrbereich 96 ist ein Verdrehschutz 100 vorgesehen, der durch planare Rohrwandbereiche 102 ausgebildet ist. Dieser verhindert, dass sich die Einleiteinrichtungen 64 und die Verbindungsbauteile 46 zueinander verdrehen.

Durch die modulare Bauweise ist es möglich, das Steigrohr 16 in Einzelteilen anzuliefern und, nachdem es in dem Schichtenspeicher 10 montiert worden ist, auch wieder zum Warten zu entfernen. Dazu müssen lediglich die Rasteinrichtungen 52 gelöst werden, wonach die einzelnen Modulbauteile 44 und Verbindungsbauteile 46 des Steigrohres 16 über den Stutzen 28 aus dem Schichtenspeicher 10 entfernt werden können.

Fig. 3 zeigt eine andere Ausführungsform des Steigrohrs 16, bei der die Verbindungsbauteile 46 und Einleiteinrichtungen 64 aus Fig. 2 als einstückiger Teilbereich 104 des Steigrohres 16 ausgebildet sind. Aus Gründen der Kürze werden die einzelnen Bereiche des einstückigen Steigrohres 105 nicht im Detail erörtert, da sie bereits in Fig. 2 beschrieben worden sind.

In dem Steigrohr 16 steigt durch den Strömungskanal 70 temperiertes Medium 24 nach oben. In dem Einleitabschnitt 74 des Abzweigkanals 68 steht temperiertes Medium 24, das bereits in dem Schichtenspeicher 10 gespeichert worden ist. Dieses hat, je nach Temperatur, eine bestimmte Dichte, und es kann durch den Staudruck, der durch das aufwärtsströmende temperierte Medium 24 in dem Steigrohr 16 entsteht, nicht in das Steigrohr 16 eindringen. Umgekehrt kann das temperierte Medium 24 den Widerstand des bereits eingespeicherten Mediums 24 nicht überwinden, weil das aufströmende Medium 24 eine geringere Dichte als das eingespeicherte Medium 24 aufweist. Aus diesem Grund kann in den Abzweigkanal 68 nur solches Medium 24 eindringen, das die passende Dichte aufweist. Das eindringende Medium 24 wird durch die Trennwand 84 von dem weiter nach oben aufsteigendem Medium 24 getrennt. Das aufsteigende Medium 24 wird entlang dem geneigten zweiten Bereich 88 der Trennwand 84 laminar weiter nach oben geleitet. Da sich die Querschnittsfläche des Abzweigkanals 68 von dem Ausleitabschnitt 72 zu dem Einleitabschnitt 74 hin kontinuierlich vergrößert, wird das ausgeleitete temperierte Medium 24 in dem Abzweigkanal 68 abgebremst. Durch die Neigung des zweiten Bereiches 88 der Trennwand 84 erhält das ausgeleitete Medium 24 einen horizontalen Impuls.

Durch das Zusammenwirken von Abbremsen und horizontalem Impuls entsteht eine laminare, horizontal ausgerichtete Strömung des ausgeleiteten Mediums 24 in das bereits eingespeicherte Medium 24. Turbulenzen werden dadurch vermieden. Damit kann das ausgeleitete Medium 24 genau in die Schicht eingeleitet werden, die die gleiche Temperatur wie es selbst aufweist.

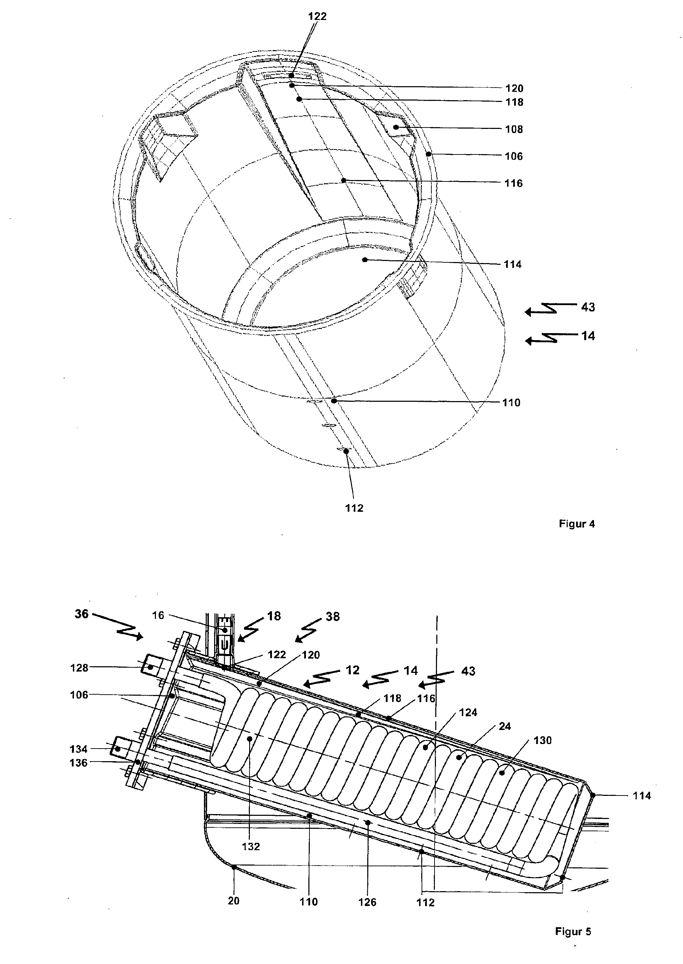

Fig. 4 zeigt eine perspektivische Ansicht auf das Gehäuse 14, das im unteren Bereich des Schichtenspeichers 10 in der seitlichen Zugriffsöffnung 36 angeordnet ist. Das Gehäuse 14 ist dazu vorgesehen, den Wärmetauscher 12 aufzunehmen, und an das Steigrohr 16 anzuschließen. Das Gehäuse 14 hat eine zylindrische Form mit an einem äußeren Ende 106 des Umfangsbereichs angeordneten Ausbuchtungen 108 zum Fixieren der Temperiereinrichtung 38. Weiter weist das Gehäuse an einem unteren Bereich 110 mehrere Eintrittsöffnungen 112 auf. Da das Gehäuse 14 schräg in den Schichtenspeicher 10 eingebaut ist, sind die Eintrittsöffnungen 112 vorzugsweise an dem inneren Ende 114 des Gehäuses 14 vorgesehen. Durch eine solche Anordnung der Eintrittsanordnung 112 dringt insbesondere kühleres Medium in das Gehäuse 14 ein und kommt mit dem Wärmetauscher 12 in Kontakt.

Auf der gegenüberliegenden Seite, dem oberen Bereich 116 des Gehäuses 14, ist ein Gehäusekanal 118 vorgesehen, der sich über die gesamte Länge des Gehäuses 14 erstreckt. Die vierte Querschnittsfläche 120 des Gehäusekanals 118 vergrößert sich von dem inneren Ende 114 des Gehäuses 14 zu dem äußeren Ende 106 des Gehäuses 14.

An dem äußeren Ende 106 des Gehäuses 14 ist in dem Gehäusekanal 118 eine längliche Ausleitöffnung 122 vorgesehen, die sich in Umfangsrichtung des Gehäuses 14 erstreckt. In dieser Ausführungsform schließt sich das Steigrohr 16 direkt an die Ausleitöffnung 122 an.

Der Gehäusekanal 118 ist dazu vorgesehen, das durch den Wärmetauscher 12 temperierte Medium 24 schnell aus dem Gehäuse 14 zu dem Steigrohr 16 zu leiten. Durch die sich vergrößernde vierte Querschnittsfläche 120 wird das temperierte Medium 24 abgebremst. Dadurch entsteht eine laminare Strömung, und das temperierte Medium 24 kann ohne Turbulenzen in das Steigrohr 16 über die Ausleitöffnung 122 einfließen. Die Ausleitöffnung 122 ist länglich ausgebildet, so dass eine große Menge des temperierten Mediums 24 in das Steigrohr 16 austreten kann, und so dass gleichzeitig gerade genau das Medium 24 austritt, das eine möglichst hohe Temperatur hat.

In Fig. 5 ist gezeigt, dass sich in dem Gehäuse 14, das seitlich in den Schichtenspeicher 10 über die Zugriffsöffnung 36 eingebracht ist, der Wärmetauscher 12 befindet. Der Wärmetauscher 12 weist im oberen Bereich 116 des Gehäuses 14 eine Wendel 124 und im unteren Bereich 110 des Gehäuses 14 ein geradliniges Bauteil 126 auf. Die Wendel 124 und das geradlinige Bauteil 126 sind am inneren Ende 114 des Gehäuses 14 miteinander verbunden.

An die Wendel 124 schließt sich im oberen Bereich 116 des Gehäuses 14 ein Zulauf 128 an, durch den ein Energieträger 130 in den Wärmetauscher 12 eingebracht wird. Der Energieträger 130 fließt durch Windungen 132 der Wendel 124 und gibt über die so entstehende große Kontaktfläche seine Energie an das Medium 24 in dem Gehäuse 14 ab.

Über das geradlinige Bauteil 126 fließt der Energieträger zum äußeren Ende 106 des Gehäuses 14 zurück und verlässt den Wärmetauscher 12 über den Ablauf 134. Der Wärmetauscher 12 ist über Befestigungselemente 136 fest mit dem Schichtenspeicher 10 verbunden.

Dadurch dass der Wärmetauscher 12 in dem Gehäuse 14 schräg in den Schichtenspeicher 10 über die Zugriffsöffnung 36 eingebracht ist, kann der Wärmetauscher zur Wartung oder zur Reparatur leicht aus dem Schichtenspeicher entfernt werden. Dazu müssen lediglich die Befestigungselemente 136 gelöst werden, und der Wärmetauscher 12 aus dem Gehäuse 14 herausgezogen werden.

Im Folgenden werden Aufbau und Funktion des Schichtenspeichers sowie dessen Vorteile noch einmal zusammenfassend erläutert:

Die Schichtladevorrichtung 18 weist einen schräg angeordneten Wärmetauscher 12 in einer wärmeisolierenden Umhausung, dem Gehäuse 14, auf, die durch einen an der Oberseite ausgebildeten Kanal, dem Gehäusekanal 118, das aufsteigende Medium 24 beschleunigt und somit die Wärme schnell und gezielt vom Wärmetauscher 12 abführt und zur Einschichtvorrichtung leitet, die ein Steigrohr mit Einleiteinrichtungen aufweist. Die exzentrische Einbaulage in der Umhausung und der unterhalb der Wärmetausch-Wendel 124 angeordnete Wärmetauscherrücklauf als geradliniges Bauteil 126 sorgen für eine maximale Abkühlung des Lade-Mediums 24 im Wärmetauscher 12.

Das erwärmte Medium 24 wird am oberen Punkt der Umhausung in eine sogenannte Zwei-Kanal-Einschichtvorrichtung überführt, die den Strömungskanal 70, mehrere Abzweigkanäle 68 und Abgabeöffnungen 75 aufweist. Das Zwei-Kanal-Einschichtsystem weist ein Rund- oder Mehrkantrohr als rohrförmiges Bauteil 94 auf, welches in bestimmten Abständen von Ausströmelementen unterbrochen wird, die die Einleiteinrichtungen 64 bilden. Diese Elemente teilen sich in einen Durchströmkanal, den sogenannten Strömungskanal 70, und einen Ausströmkanal, den sogenannten Abzweigkanal 68. Der Durchströmkanal reduziert den Querschnitt des Rohres, so dass ein Staudruck entsteht.

Dieser Staudruck sorgt einerseits für eine Beschleunigung des aufsteigenden Mediums 24 im Durchströmkanal und andererseits für einen Gegendruck zum kälteren Speichermedium, insbesondere Speicherwasser, welches sonst auf Grund seiner größeren Dichte das Medium 24 im Durchströmkanal verdrängen und im Durchströmkanal zu einer unerwünschten niedrigeren Mischtemperatur führen würde. Die Länge des parallelen Verlaufs der Kanäle (des Strömungskanals 70 und des Abzweigkanals 68) und die prozentuale Aufteilung des Querschnitts sind für deren Funktion optimiert. Die Einschichtvorrichtung wird vorzugsweise aus wärmelisolierendem Material 43 hergestellt, um unerwünschte Wärmeübertragung durch die Wandung der Einschichtvorrichtung zu minimieren.

Die Einschichtvorrichtung wird vorzugsweise unterteilt in Rohrstücke als Verbindungsbauteile 46 und Zwei-Kanal-Einschichtvorrichtungselemente als Einleiteinrichtungen 64. Mit diesem Baukastensystem wird erreicht, dass die Teile für unterschiedliche Schichtenspeicherhöhen und -größen verwendet werden können. Der modulare Aufbau ermöglicht außerdem ein Einbringen nach dem gesamten Fertigungsablauf und kann für Servicezwecke ausgebaut werden.

### Bezugszeichenliste:

- 10: Schichtenspeicher
- 12: Wärmetauscher
- 14: Gehäuse
- 16: Steigrohr
- 18: Schichtladevorrichtung
- 20: Boden
- 22: Kopfende
- 24: Medium
- 28: Stutzen
- 30: Zugangsöffnung
- 32: Deckel
- 34: Wandung
- 36: Zugriffsöffnung
- 38: Temperiereinrichtung
- 40: Inneres
- 42: modular ausgebildetes Steigrohr
- 43: wärmeisolierendes Material
- 44: Modulbauteil
- 46: Verbindungsbauteil
- 48: Ring
- 50: Steckverbindung
- 52: Rasteinrichtung
- 54: Begrenzungsanschlag
- 56: Rohr
- 58: Ende
- 60: Einrastnute
- 62: Rastvorsprünge
- 64: Einleiteinrichtung
- 66: Abzweigstelle
- 68: Abzweigkanal
- 70: Strömungskanal
- 72: Ausleitabschnitt
- 74: Einleitabschnitt
- 75: Abgabeöffnung
- 76: Verengung
- 78: erste Querschnittsfläche
- 80: zweite Querschnittsfläche
- 82: dritte Querschnittsfläche
- 84: Trennwand
- 85: Begrenzung
- 86: erster Bereich
- 88: zweiter Bereich
- 90: Führungstrennwand
- 92: erweiternder Abschnitt
- 94: rohrförmiges Bauteil
- 96: Rohrbereich
- 98: Rohrwandbereich
- 100: Verdrehschutz
- 102: planarer Rohrwandbereich
- 104: einstückiger Teilbereich
- 105: einstückiges Steigrohr
- 106: äußeres Ende
- 108: Ausbuchtung
- 110: unterer Bereich
- 112: Eintrittsöffnung
- 114: inneres Ende
- 116: oberer Bereich
- 118: Gehäusekanal
- 120: vierte Querschnittsfläche
- 122: Ausleitöffnung
- 124: Wendel
- 126: geradliniges Bauteil

- 128: Zulauf
- 130: Energieträger
- 132: Windungen
- 134: Ablauf
- 136: Befestigungselemente

## Patentansprüche

1. Schichtladevorrichtung (18) zum Einschichten eines temperierten Mediums (24) in einen Schichtenspeicher (10) mit wenigstens einer Einleiteinrichtung (64) mit einem zum Betrieb des Schichtenspeichers (10) sich in einer vertikalen Richtung nach oben erstreckend anzuordnenden Strömungskanal (70), wobei die Einleiteinrichtung (64) wenigstens eine Abzweigstelle (66) aufweist, an der ein Abzweigkanal (68) zum Ausleiten temperierten Mediums (24) aus dem Strömungskanal (70) und zum Einleiten des temperierten Mediums (24) in den Schichtenspeicher (10) von dem Strömungskanal (70) abzweigt,
**dadurch gekennzeichnet, dass** der Abzweigkanal (68) einen sich von der Abzweigstelle (66) aus in einer vertikalen Richtung erstreckend anzuordnenden Ausleitabschnitt (72) aufweist, dass der Strömungskanal (70) an der Abzweigstelle (68) eine Verengung (76) aufweist und dass an der Abzweigstelle (68) eine erste Querschnittsfläche (78) des Strömungskanals (70) größer ist als eine zweite Querschnittsfläche (80) des Ausleitabschnittes (72).

2. Schichtladevorrichtung (18) nach einem der voranstehenden Ansprüche,
**dadurch gekennzeichnet, dass** der Strömungskanal (70) für eine nach oben gerichtete vertikale Erstreckung in seiner gesamten Länge während des Betriebs ausgebildet ist und der Abzweigkanal (68) im Bereich des Ausleitabschnitts (72) parallel zu dem Strömungskanal (70) angeordnet ist.

3. Schichtladevorrichtung (18) nach einem der vorstehenden Ansprüche,
**dadurch gekennzeichnet, dass** der Abzweigkanal (68) wenigstens einen Einleitabschnitt (74) aufweist, der für eine Anordnung im Betrieb in vertikaler Richtung oberhalb des Ausleitabschnittes (72) ausgebildet ist, wobei der Einleitabschnitt (74) eine Abgabeöffnung (75) zum Einleiten des Mediums (24) aus der Einleiteinrichtung (74) in den Schichtenspeicher (10) aufweist, dass die Querschnittsfläche der Abgabeöffnung (75) größer ist als die Querschnittfläche des Ausleitabschnittes (72) und wobei sich eine dritte Querschnittsfläche (82) des Einleitabschnittes (74) von dem Ausleitabschnitt (72) kontinuierlich vergrößert.

4. Schichtladevorrichtung (18) nach einem der vorstehenden Ansprüche,
**dadurch gekennzeichnet, dass** die Einleiteinrichtung (64) in einem Bereich der Abzweigstelle (66) eine Trennwand (84) zwischen dem Strömungskanal (70) und dem Abzweigkanal zum Trennen des Strömungs- von dem Abzweigkanal aufweist, wobei die Trennwand als Führungstrennwand zum Entlangführen des im Betrieb vertikal nach oben strömenden Mediums in dem Strömungskanal (70) ausgebildet ist, wobei die Trennwand (84) insbesondere derart ausgebildet ist, dass sie sich im Betrieb in einem ersten Bereich (86) parallel zu dem Strömungskanal (70) in vertikaler Richtung erstreckt und/oder sich in einem zweiten Bereich (88) in Strömungsrichtung gesehen von dem Strömungskanal (70) aus in vertikaler und horizontaler Richtung nach außen geneigt erstreckt.

5. Schichtladevorrichtung (18) nach einem der vorstehenden Ansprüche,
**dadurch gekennzeichnet, dass** die Verengung (76) durch den Abzweigkanal (68) gebildet ist.

6. Schichtladevorrichtung (18) nach einem der vorstehenden Ansprüche,
**dadurch gekennzeichnet, dass** sich der Strömungskanal (70) in Strömungsrichtung nach der Verengung (76) gesehen einen sich in der Querschnittsfläche kontinuierlich erweiternden Abschnitt (90) aufweist.

7. Schichtladevorrichtung (18) nach Anspruch 4, 5 und 6,
**dadurch gekennzeichnet, dass** die Verengung (76) durch den in dem Strömungskanal (70) linear ragenden ersten Bereich (86) gebildet ist und der sich erweiternde Abschnitt (90) durch die Anordnung des geneigten zweiten Bereichs (88) als Teil einer Begrenzung (85) des Strömungskanals (70) ausgebildet ist.

8. Schichtladevorrichtung (18) nach einem der vorstehenden Ansprüche,
**dadurch gekennzeichnet, dass** der Strömungskanal (70) und der Abzweigkanal (68) in einem rohrförmigen Bauteil (94), insbesondere in einem rohrförmigen Bauteil (94) mit wenigstens einem Verdrehschutz (100), gebildet sind, welches einen Rohrbereich (96) mit sich in Strömungsrichtung erstreckenden Rohrwandbereichen (98) aufweist.

9. Schichtladevorrichtung (18) nach einem der vorstehenden Ansprüche,
**dadurch gekennzeichnet, dass** die Schichtladevorrichtung (18) ein Steigrohr (16) aufweist, wobei die Einleiteinrichtung (64) als Modulbauteil (44) des Steigrohres (16) in einer modularen Bauweise oder als einstückiger Teilbereich (104) des Steigrohres (16) ausgebildet ist.

10. Schichtladevorrichtung (18) nach Anspruch 9,
**dadurch gekennzeichnet, dass** das modular ausgebildete Steigrohr (42) wenigstens ein Verbindungsbauteil (46) aufweist, das mit wenigstens einem der Modulbauteile (44) verbunden ist.

11. Schichtladevorrichtung (18) nach Anspruch 10,
**dadurch gekennzeichnet, dass** das Verbindungsbauteil (46) mit einer Steckverbindung (50) mit dem Modulbauteil (44) verbunden ist, die wenigsten eines der folgenden Merkmale aufweist:
- die Steckverbindung (50) weist eine Rasteinrichtung (52) zum Fixieren der Steckverbindung (50) aufweist;
- die Steckverbindung (50) weist einen Begrenzungsanschlag (54) aufweist.

12. Schichtenspeicher (10) mit einem im Betrieb in vertikaler Richtung oben befindlichen Kopfende (22) und einem im Betrieb in vertikaler Richtung unten befindlichen Boden (20) sowie mit einer Temperiereinrichtung (38) und mit einem daran angeschlossenen Steigrohr (16),
**dadurch gekennzeichnet, dass** der Schichtenspeicher (10) eine Schichtladevorrichtung (18) nach einem der vorstehenden Ansprüche aufweist.

13. Schichtenspeicher (10) nach Anspruch 12,
**dadurch gekennzeichnet, dass** sich der Schichtenspeicher (10) wenigsten einer der folgenden Merkmale aufweist:
- ein Steigrohr (16) erstreckt sich mit wenigstens einer Einleiteinrichtung (64) im Betrieb des Schichtenspeichers (10) vertikal bis zum Kopfende (22) des Schichtenspeichers (10) erstreckt, wobei am Kopfende (22) eine verschließbare Zugangsöffnung (30) zum Bilden eines Zugangs zu dem Steigrohr (16) vorgesehen ist;
- eine Zugriffsöffnung (36) ist zum Bilden eines Zugangs zu der Temperiereinrichtung (38) seitlich am Schichtenspeicher (10) angeordnet;
- die Temperiereinrichtung (38) ist schräg in dem Schichtenspeicher (10) eingebracht, wobei ein zu einem Außenbereich des Schichtenspeichers (10) weisendes äußeres Ende (106) der Temperiereinrichtung (38) höher angeordnet ist als ein sich im Inneren des Schichtenspeichers (10) befindliches inneres Ende (114) der Temperiereinrichtung (38);
- die Temperiereinrichtung (38) weist einen Wärmetauscher (12), insbesondere für eine Solaranlage, zum Temperieren eines Mediums (24) und ein Gehäuse (14) aus wärmeisolierendem Material (43) für den Wärmetauscher (12) und zum Aufnehmen des zu temperierenden Mediums (24) und zum Weiterleiten des temperierten Mediums (24) in das Steigrohr (16) auf.

14. Schichtenspeicher (10) nach Anspruch 13,
**dadurch gekennzeichnet, dass** das Gehäuse (14) an einem zum Boden (20) des Schichtenspeichers (10) weisenden unteren Bereich (110) wenigstens eine Eintrittsöffnung (112)zum Eintreten des zu temperierenden Mediums (24) aufweist, wobei die Eintrittsöffnungen (112) an dem zum Inneren des Schichtenspeichers (10) weisenden inneren Ende (114) des Gehäuses (14) gebildet sind.

15. Schichtenspeicher (10) nach Anspruch 13 oder 14,
**dadurch gekennzeichnet, dass** das Gehäuse (14) oberhalb des Wärmetauschers (12) wenigstens einen Gehäusekanal (118) zum Leiten von durch den Wärmetauscher (12) aufgeheiztem Medium (24) zum Steigrohr (16) aufweist, wobei der Gehäusekanal (118) an dem zum Kopfende (22) des Schichtenspeichers (10) weisenden oberen Bereich (116) des Gehäuses (14) angeordnet ist und das Steigrohr (16) an den Gehäusekanal (118) angeschlossen ist, wobei sich insbesondere eine vierte Querschnittsfläche (120) des Gehäusekanals (118) in Richtung von dem inneren Ende (114) des Gehäuses (14) zu dem äußeren Ende (106) des Gehäuses (14) gesehen vergrößert.

## Claims

1. Layer loading device (18) for the stratified loading of a tempered medium (24) into a stratified storage (10), comprising at least one introduction device (64) including a flow passage (70) which for operation of said stratified storage (10) is to be arranged so as to extend upwardly in a vertical direction, said introduction device (64) including at least one branch-off point (66) where a branch-off passage (68) for discharging the tempered medium (24) from the flow passage (70) and for introducing the tempered medium (24) into the stratified storage (10) branches off from the flow passage (70), ***characterized* in that** the branch-off passage (68) comprises a discharge section (72) to be arranged so as to extend in a vertical direction from the branch-off point (66), that the flow passage (70) includes a constriction (76) at the branch-off point (68), and that a first cross sectional area (78) of the flow passage (70) is larger than a second cross sectional area (80) of the discharge section (72) at the branch-off point (68).

2. Layer loading device (18) according to one of the preceding claims, ***characterized* in that** the flow passage (70) is constructed for an upwardly directed vertical extension of its overall length during operation and the branch-off passage (68) is arranged parallel to the flow passage (70) in the region of the discharge section (72).

3. Layer loading device (18) according to one of the preceding claims, ***characterized* in that** the branch-off passage (68) comprises at least one introduction section (74) which is constructed for an arrangement in a vertical direction above the discharge section (72) during operation, the introduction section (74) including a delivery opening (75) for introducing the medium (24) from the introduction device (74) into the stratified storage (10), that the cross sectional area of the delivery opening (75) is larger than the cross sectional area of the discharge section (72) and wherein a third cross sectional area (82) of the introduction section (74) continuously increases from the discharge section (72).

4. Layer loading device (18) according to one of the preceding claims, ***characterized* in that** the introduction device (64) includes a separation wall (84) between the flow passage (70) and the branch-off passage for separating the flow passage from the branch-off passage in a region of the branch-off point (66), wherein the separation wall is designed as a guiding separation wall for guiding the medium flowing vertically upwardly during operation in the flow passage (70), the separation wall (84) in particular being constructed in such a manner as to extend in a vertical direction parallel to the flow passage (70) in a first region (86) and/or outwardly inclined in a vertical and horizontal direction from the flow passage (70) viewed in the flow direction in a second region (88) during operation.

5. Layer loading device (18) according to one of the preceding claims, ***characterized* in that** the constriction (76) is formed by the branch-off passage (68).

6. Layer loading device (18) according to one of the preceding claims, *characterized* the flow passage (70) viewed in the flow direction after the constriction (76) includes a continuously expanding section (90) in the cross sectional area.

7. Layer loading device (18) according to claim 4, 5 and 6, ***characterized* in that** the constriction (76) is formed by the linearly protruding first region (86) in the flow passage (70) and that the second, expanding section (90) is formed by the arrangement of the inclined second region (88) as a part of a boundary (85) of the flow passage (70).

8. Layer loading device (18) according to one of the preceding claims, ***characterized* in that** the flow passage (70) and branch-off passage (68) are formed in a tubular component (94), particularly in a tubular component (94) including at least one anti-turn locking device (100), the tubular component (94) including a tube region (96) having tube wall regions (98) extending in the flow direction.

9. Layer loading device (18) according to one of the preceding claims, ***characterized* in that** the layer loading device (18) includes a riser pipe (16), wherein the introduction device (64) is constructed as a modular component (44) of the riser pipe (16) in a modular design or as a one-piece portion (104) of the riser pipe (16).

10. Layer loading device (18) according to claim 9,
***characterized* in that** the modular riser pipe (42) includes at least one connection component (46) that is connected to at least one of the modular components (44).

11. Layer loading device (18) according to claim 10,
***characterized* in that** the connection component (46) is connected to said modular component (44) using a plug connection (50) that comprises at least one of the following features:
- the plug connection (50) includes a detent device (52) for fixing said plug connection (50);
- the plug connection (50) includes a limit stop (54).

12. Stratified storage (10) having a head end (22) located at the top in the vertical direction during operation and a bottom (20) located at the bottom in the vertical direction during operation as well as a tempering device (38) and a riser pipe (16) connected thereto,
***characterized* in that** the stratified storage (10) includes a layer loading device (18) according to one of the preceding claims.

13. Stratified storage (10) according to claim 12,
***characterized* in that** the stratified storage (10) comprises at least one of the following features:
- a riser pipe (16) extends with at least one introduction device (64) in the vertical direction up to the head end (22) of the stratified storage (10) during the operation of the stratified storage (10), a closable access opening (30) for forming an access to the riser pipe (16) being provided at the head end (22);
- an access opening (36) is formed laterally on the stratified storage (10) for forming an access to the tempering device (38);
- the tempering device (38) is installed in the stratified storage (10) in an inclined manner, with an outer end (106) of the tempering device (38) pointing to an outer region of the stratified storage (10) being arranged higher than an inner end (114) of the tempering device (38) located inside the stratified storage (10);
- the tempering device (38) includes a heat exchanger (12), particularly for a solar plant, for tempering a medium (24), and a housing (14) made of a thermally insulating material (43) for the heat exchanger (12) and for receiving the medium (24) to be tempered and for transferring the tempered medium (24) to the riser pipe (16).

14. Stratified storage (10) according to claim 13,
***characterized* in that** the housing (14) includes at lower region (110) pointing to the bottom (20) of the stratified storage (10) at least one inlet opening (112) for the entry of the medium (24) to be tempered, the inlet openings (112) being formed on the inner end (114) of the housing (14) pointing to the interior of the stratified storage (10).

15. Stratified storage (10) according to claim 13 or 14,
***characterized* in that** above the heat exchanger (12) the housing (14) includes at least one housing passage (118) for guiding medium (24) to be heated by the heat exchanger (12) to the riser pipe (16), the housing passage (118) being arranged at the upper part (116) of the housing (14) pointing to the head end (22) of the stratified storage (10) and the riser pipe (16) being connected to the housing passage (118), wherein particularly a fourth cross sectional area (120) of the housing passage (118) increases in a direction viewed from the inner end (114) of the housing (14) to the outer end (106) of the housing (14).

## Revendications

1. Dispositif de chargement en couches (18) pour l'intégration d'un milieu tempéré (24) dans les couches d'un accumulateur en couches (10), comprenant au moins un dispositif d'introduction (64) avec un canal d'écoulement (70) à agencer de manière à s'étendre verticalement vers le haut pour le fonctionnement de l'accumulateur en couches (10), dans lequel le dispositif d'introduction (64) comprend au moins un emplacement de ramification (66) au niveau duquel un canal de ramification (68) est ramifié du canal d'écoulement (70) pour faire sortir le milieu tempéré (24) hors du canal d'écoulement (70) et pour introduire le milieu tempéré (24) dans l'accumulateur en couches (10), **caractérisé en ce que** le canal de ramification (68) comprend un tronçon de sortie (72) à agencer en direction verticale en partant de l'emplacement de ramification (66), **en ce que** le canal d'écoulement (70) comporte au niveau de l'emplacement de ramification (68) un rétrécissement (76), et **en ce qu'**une première surface de section transversale (78) du canal d'écoulement (70), au niveau de l'emplacement de ramification (68), est plus grande qu'une seconde surface de section transversale (80) du tronçon de sortie (72).

2. Dispositif de chargement en couches (18) selon l'une des revendications précédentes,
**caractérisé en ce que** le canal d'écoulement (70) est réalisé en vue d'une extension verticale orientée vers le haut sur la totalité de sa longueur pendant le fonctionnement, et le canal de ramification (68) est agencé dans la région du tronçon de sortie (72) parallèlement au canal d'écoulement (70).

3. Dispositif de chargement en couches (18) selon l'une des revendications précédentes,
**caractérisé en ce que** le canal de ramification (68) comprend au moins un tronçon d'introduction (74), qui est réalisé pour être agencé en fonctionnement en direction verticale au-dessus du tronçon de sortie (72), le tronçon d'introduction (74) comportant une ouverture de distribution (75) pour introduire le milieu (24) hors du dispositif d'introduction (74) jusque dans l'accumulateur en couches (10), **en ce que** la surface de section transversale de l'ouverture de distribution (75) est plus grande que la surface de section transversale du tronçon de sortie (72), et dans lequel une troisième surface de section transversale (82) du tronçon d'introduction (74) augmente en continu depuis le tronçon de sortie (72).

4. Dispositif de chargement en couches (18) selon l'une des revendications précédentes,
**caractérisé en ce que** le dispositif d'introduction (64) comporte, dans une région de l'emplacement de ramification (66), une paroi de séparation (84) entre le canal d'écoulement (70) et le canal de ramification pour séparer le canal d'écoulement vis-à-vis du canal de ramification, dans lequel la paroi de séparation est réalisée sous forme de paroi de séparation et de guidage pour guider le long d'elle-même le milieu qui s'écoule verticalement vers le haut en fonctionnement dans le canal d'écoulement (70), dans lequel la paroi de séparation (84) est réalisée en particulier de telle manière qu'elle s'étend en fonctionnement dans une première région (86) parallèle au canal d'écoulement (70), en direction verticale, et/ou qu'elle s'étend dans une seconde région (88), vue en direction d'écoulement, de manière inclinée vers l'extérieur en direction verticale et horizontale depuis le canal d'écoulement (70).

5. Dispositif de chargement en couches (18) selon l'une des revendications précédentes,
**caractérisé en ce que** le rétrécissement (76) est formé par le canal de ramification (68).

6. Dispositif de chargement en couches (18) selon l'une des revendications précédentes,
**caractérisé en ce que** le canal d'écoulement (70) comporte, vu dans la direction d'écoulement après le rétrécissement (76), un tronçon (90) dont la surface transversale s'élargit en continu.

7. Dispositif de chargement en couches (18) selon la revendication 4, 5 et 6,
**caractérisé en ce que** le rétrécissement (76) est formé par la première région (86) qui pénètre de façon linéaire dans le canal d'écoulement (70), et le tronçon qui va en s'élargissant (90) est réalisé par l'agencement de la seconde région inclinée (88) en tant que partie d'une délimitation (85) du canal d'écoulement (70).

8. Dispositif de chargement en couches (18) selon l'une des revendications précédentes,
**caractérisé en ce que** le canal d'écoulement (70) et le canal de ramification (68) sont formés dans un composant en forme de tube (94), en particulier dans un composant de forme tubulaire (94) avec au moins une protection antirotation (100), qui comporte une zone tubulaire (96) avec des zones de paroi tubulaires (98) s'étendant en direction d'écoulement.

9. Dispositif de chargement en couches (18) selon l'une des revendications précédentes,
**caractérisé en ce que** le dispositif de chargement en couches (18) comprend un tube montant (16), et le dispositif d'introduction (64) est réalisé sous forme de composant modulaire (44) du tube montant (16), dans un mode de fabrication modulaire, ou bien à titre de zone partielle d'un seul tenant (104) du tube montant (16).

10. Dispositif de chargement en couches (18) selon la revendication 9,
**caractérisé en ce que** le tube montant (42) de réalisation modulaire comprend au moins un composant de liaison (46), qui est relié à l'un au moins des composants modulaires (44).

11. Dispositif de chargement en couches (18) selon la revendication 10,
**caractérisé en ce que** le composant de liaison (46) est relié avec le composant modulaire (44) au moyen d'une liaison à enfichage (50), qui présente l'une au moins des caractéristiques suivantes :
- la liaison à enfichage (50) comprend un premier dispositif à enclenchement (52) pour fixer la liaison à enfichage (50) ;
- la liaison à enfichage (50) comprend au moins une butée de limitation (54).

12. Accumulateur en couches (10) comportant une extrémité de tête (22) qui se trouve en haut en direction verticale en fonctionnement, et un fond (20) qui se trouve en bas en direction verticale en fonctionnement, ainsi qu'un dispositif de températion (38), et un tube montant (16) relié à celui-ci,
**caractérisé en ce que** l'accumulateur en couches (10) comprend un dispositif de chargement en couches (18) selon l'une des revendications précédentes.

13. Accumulateur en couches (10) selon la revendication 12,
**caractérisé en ce que** l'accumulateur en couches (10) présente l'une au moins des caractéristiques suivantes :
- un tube montant (16) s'étend, avec au moins un dispositif d'introduction (64) en fonctionnement de l'accumulateur en couches (10), verticalement jusqu'à l'extrémité de tête (22) de l'accumulateur en couches (10), dans lequel une ouverture d'accès (30) capable d'être obturée est prévue à l'extrémité de tête (22) pour former un accès au tube montant (16) ;
- une ouverture d'intervention (36) est agencée latéralement sur l'accumulateur en couches (10) pour former un accès au dispositif de températion (38) ;
- le dispositif de températion (38) est introduit en oblique dans l'accumulateur en couches (10), de sorte qu'une extrémité extérieure (106), tournée vers une zone extérieure de l'accumulateur en couches (10), du dispositif de températion (38), est agencée plus haute qu'une extrémité intérieure (114), qui se trouve à l'intérieur de l'accumulateur en couches (10), du dispositif de températion (38) ;
- le dispositif de températion (38) comprend un échangeur de chaleur (12), en particulier pour une installation solaire, afin de tempérer un milieu (24), et un boîtier (14) en matériau thermiquement isolant (43) pour l'échangeur de chaleur (12) et pour recevoir le milieu à tempérer (24) et pour faire suivre le milieu tempéré (24) vers le tube montant (16).

14. Accumulateur en couches (10) selon la revendication 13, **caractérisé en ce que** le boîtier (14) comporte, au niveau d'une région inférieure (110) tournée vers le fond (20) de l'accumulateur en couches (10), au moins une ouverture d'entrée (112) pour l'entrée du milieu à tempérer (24), dans lequel les ouvertures d'entrée (112) sont formées à l'extrémité intérieure (114), tournée vers l'intérieur de l'accumulateur en couches (10), du boîtier (14).

15. Accumulateur en couches (10) selon la revendication 13 ou 14, **caractérisé en ce que** le boîtier (14) comprend, au-dessus de l'échangeur de chaleur (12), au moins un canal (118) pour amener le milieu (24) échauffé par l'échangeur de chaleur (12) vers le tube montant (16), dans lequel le canal (118) du boîtier est agencé au niveau de la région supérieure (116), tournée vers l'extrémité de tête (22) de l'accumulateur en couches (10), du boîtier (14), et le tube montant (16) est branché au canal (118) du boîtier, et dans lequel en particulier une quatrième surface de section transversale (120) du canal (118) du boîtier va en s'agrandissant, vue en direction depuis l'extrémité intérieure (114) du boîtier (14) vers l'extrémité extérieure (106) du boîtier (14).
